(19) Europäisches Patentamt
European Patent Office
Office européen des brevets

(11) EP 3 388 476 A1

(12) EUROPEAN PATENT APPLICATION
published in accordance with Art. 153(4) EPC

(43) Date of publication:
17.10.2018 Bulletin 2018/42

(51) Int Cl.:
C08J 9/00 (2006.01)     B32B 27/32 (2006.01)

(21) Application number: 16873072.9

(86) International application number:
PCT/JP2016/086544

(22) Date of filing: 08.12.2016

(87) International publication number:
WO 2017/099179 (15.06.2017 Gazette 2017/24)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 11.12.2015 JP 2015241725

(71) Applicant: Yupo Corporation
Tokyo 101-0062 (JP)

(72) Inventors:
• ISHIMOTO, Shouichi
Tokyo 101-0062 (JP)
• HIROI, Yousuke
Tokyo 101-0062 (JP)
• KITAMURA, Kazuhisa
Tokyo 101-0062 (JP)

(74) Representative: Zimmermann & Partner
Patentanwälte mbB
Postfach 330 920
80069 München (DE)

(54) **POLYOLEFIN STRETCHED POROUS FILM**

(57) The present invention is to provide a resin film having both water impermeability and moisture permeability. The polyolefin stretched porous film according to an embodiment of the present invention contains a polyolefin-based resin and a fine filler having an average primary particle size of 0.05 to 0.8 μm, and has a communicating void. Furthermore, the polyolefin stretched porous film according to an embodiment of the present invention contains a hydrophobizing agent, a water permeability measured in accordance with JIS Z 0221 is from 10000 to 85000 seconds, and a moisture permeability measured in accordance with JIS Z 0208 is from 300 to 2500 g/m2·24 h.

EP 3 388 476 A1

**Description**

Technical Field

The present invention relates to a polyolefin stretched porous film.

Background Art

In the related art, stretched porous resin films formed by stretching thermoplastic resins have been known. In recent years, use of the stretched porous resin films has been promoted in a wide variety of fields, such as ballot paper, packaging labels, and in-mold labels in addition to printing purposes such as posters and commercial printing, because the stretched porous resin films have excellent basic performances, such as tensile strength, bending strength, shock resistance, durability, water resistance, and chemical resistance.

In addition to these basic performances, an attempt has been made to impart favorable water absorbency and gas permeability to stretched porous resin films. For example, Patent Document 1 discloses a stretched resin film in which a number of voids is formed in an inner part of a film base material by stretching a resin composition obtained by blending inorganic fine powder having a surface treated with a hydrophilizing agent in a thermoplastic resin. This stretched resin film is thought to be advantageous as an original paper for coating, such as film-based synthetic paper to which a water-based ink, a water-based adhesive agent, or the like is applied, or the like because of the excellent absorbency of the water-based adhesive agent, the water-based ink, or water serving as a solvent thereof and because a uniform coating appearance can be obtained without generating air bubbles although a part of the coating is absorbed into the film base material in the case where the coating is applied to the film base material surface.

Citation List

Patent Literature

Patent Document 1: JP 2014-080025 A

Summary of Invention

Technical Problem

On the other hand, there are various technical fields that do not require water absorbency or water permeability but that require water impermeability and appropriate moisture permeability that suppress permeation of excessive water. For example, mulching films for agriculture require water impermeability that suppresses permeation of excessive water into soil from the perspectives of preventing mud spattering due to rain, preventing ridges from being eroded, preventing fertilizer from flowing out, and the like. At the same time, mulching films for agriculture require appropriate moisture permeability from the perspective of allowing transpiration of excessive water content in cultivated fields while sufficient moisture retention for roots is maintained. Use as materials for medical purpose, materials for clothing, materials for packaging, materials for sanitary purpose, and the like may also require simultaneous achievement of these characteristics.

However, among known stretched porous resin films in the related art, although water impermeability can be easily achieved, a stretched porous resin film that also simultaneously achieves appropriate moisture permeability, i.e. a stretched porous resin film through which, from one face to the other face of the stretched film, water is less likely to be permeated but water vapor is easily permeated, has not been achieved.

The present invention has been completed in light of such background art. An object of the present invention is to provide a stretched porous resin film having both water impermeability and appropriate moisture permeability.

Solution to Problem

As a result of diligent research to solve the problems described above, the inventors of the present invention found that a stretched porous resin film having particular voids that control permeation of water vapor and infiltration of water can achieve both performances of water impermeability and moisture permeability, and thus completed the present invention.

That is, the present invention provides various specific embodiments described below.

[1] A polyolefin stretched porous film including: a polyolefin-based resin, a fine filler having an average primary particle size of 0.05 to 0.8 μm, and a communicating void;

the polyolefin stretched porous film including a hydrophobizing agent;

a water permeability measured in accordance with JIS Z 0221 being from 10000 to 85000 seconds; and

a moisture permeability measured in accordance with JIS Z 0208 being from 700 to 2500 g/m²·24 h.

[2] The polyolefin stretched porous film according to [1] above, where the polyolefin stretched porous film contains from 25 to 65 mass% of the polyolefin-based resin and from 32 to 72 mass% of the fine filler.

[3] The polyolefin stretched porous film according to [1] or [2] above, where a gas permeability measured in accordance with JIS P 8117 is from 5000 to 85000 seconds.

[4] The polyolefin stretched porous film according to any one of [1] to [3] above, where a wetting tension is from 31 to 42 mN/m.

[5] The polyolefin stretched porous film according to any one of [1] to [4] above, where a density is from 0.45 to 0.7 g/cm³.

[6] The polyolefin stretched porous film according to any one of [1] to [5] above, where, in a case where a film density measured in accordance with the method A of JIS K 7112 by using distilled water as an immersion liquid is $\rho_w$ and a film density measured in accordance with the method A of JIS K 7112 by using a liquid having a surface tension of 27.3 mN/m as an immersion liquid is $\rho_s$, a difference between the density $\rho_s$ and the density $\rho_w$ is from 0.15 to 1.15.

[7] The polyolefin stretched porous film according to any one of [1] to [6] above, where, in a case where a film density before stretching measured in accordance with the method A of JIS K 7112 by using distilled water as an immersion liquid is $\rho_0$, a film density after stretching measured in accordance with the method A of JIS K 7112 by using distilled water as an immersion liquid is $\rho_w$, and a film density measured in accordance with the method A of JIS K 7112 by using a liquid having a surface tension of 27.3 mN/m as an immersion liquid is $\rho_s$, a ratio of a communicating void fraction to an entire void fraction defined by the equation below (communicating void fraction/entire void fraction) is from 0.4 to 0.85.

[Equation 1]

$$\frac{\text{Communicating void fraction (\%)}}{\text{Entire void fraction (\%)}} = \frac{\rho_s - \rho_w}{\rho_0 - \rho_w}$$

[8] The polyolefin stretched porous film according to any one of [1] to [7] above, where the hydrophobizing agent contains at least one type selected from the group consisting of organic carboxylic acids, salts of organic carboxylic acids, amides of organic carboxylic acids, esters of organic carboxylic acids and alcohols having from 1 to 6 carbons, poly(meth)acrylic acids, and silane coupling agents.

[9] The polyolefin stretched porous film according to any one of [1] to [8] above, where the fine filler contains inorganic fine powder having the hydrophobizing agent on a surface.

[10] The polyolefin stretched porous film according to [9] above, where the inorganic fine powder is calcium carbonate.

Advantageous Effects of Invention

According to an embodiment of the present invention, a polyolefin stretched porous film having both water impermeability and appropriate moisture permeability can be provided.

Description of Embodiments

Hereinafter, embodiments of the present invention are described. Note that the embodiments described below are examples to describe the present invention, and the present invention is not limited to the embodiments. In the present specification, the numeric ranges expressed using "to" indicate ranges that include the numeric values written before and after the "to" as the lower and upper limits, respectively.

Polyolefin stretched porous film

The polyolefin stretched porous film of the present embodiment is a stretched film containing at least a polyolefin-based resin and a predetermined fine filler, and further having voids that communicate with an inner part of the film (communicating voids). Note that the polyolefin stretched porous film may be, hereinafter, also referred to as "stretched porous film".

The voids and communicating voids are voids (gaps) present in the stretched porous film and impart porosity (porous structure) to the stretched porous film and predetermined moisture permeability described below to the stretched porous film. Note that a fine void that is partitioned to be separated in the film is referred to as the void, and a void having a relatively high volume that is formed by allowing adjacent two or more voids to communicate with each other in, for example, linear, rectangular, spherical, net-like, or irregular form is referred to as the "communicating void". The voids and the communicating voids need to be present at least in the inner part of the stretched porous film, and a part thereof may be exposed to the outside on the surface of the stretched porous film. The method of forming such voids and communicating voids is not particularly limited and may be a publicly known method, such as an internal paper-manufacturing method and a foaming method. For example, in the case of the internal paper-manufacturing method, a void is typically formed in the film by using a fine filler contained in the polyolefin-based resin as a nucleus when a polyolefin film is stretched to form a film.

Polyolefin-based resin

Examples of the polyolefin-based resin that can be used in the stretched porous film of the present embodiment include crystalline ethylene-based resins, such as high density polyethylene, medium density polyethylene, and low density polyethylene, crystalline propylene-based resins, polymethyl-1-pentene, ethylene-cyclic olefin copolymers, and the like; however, the polyolefin-based resin is not particularly limited thereto. One type of these can be used alone, or two or more types of these can be used in combination.

Among these, from the perspective of water resistance, solvent resistance, chemical resistance, production cost, and the like, crystalline ethylene-based resins and crystalline propylene-based resins are preferable. As the crystalline propylene-based resin, an isotactic polymer or syndiotactic polymer formed by homopolymerizing propylene is more preferable. Furthermore, a copolymer of propylene, which is the main component, and an $\alpha$-olefin, such as ethylene, 1-butene, 1-hexene, 1-heptene, and 4-methyl-1-pentene, can be also used. The copolymer may have a monomer component of a binary component system, a ternary component system, or a multiple component system, and may be a random copolymer or a block copolymer.

The content of the polyolefin-based resin is not particularly limited but is preferably 25 mass% or greater, more preferably 30 mass% or greater, and even more preferably 35 mass% or greater, relative to the total amount of the stretched porous film. Furthermore, the content of the polyolefin-based resin is not particularly limited but is preferably 65 mass% or less, more preferably 60 mass% or less, and even more preferably 55 mass% or less, relative to the total amount of the stretched porous film. By setting the content of the polyolefin-based resin to an amount that is not less than the lower limit but not greater than the upper limit described above, in particular, a stretched porous film having a preferable porous structure tends to be obtained. Furthermore, by setting the content to be within the range described above, in particular, water impermeability tends to be achieved.

Fine filler

The fine filler that can be used in the stretched porous film of the present embodiment has an average primary particle size of a particular range. The average primary particle size imparts predetermined voids described below to the stretched porous film. Furthermore, this fine filler preferably has an inorganic filler that is used in stretched porous films in the related art on its surface, and typically, preferably has a hydrophobic surface that exhibits higher hydrophobicity than the hydrophobicity of calcium carbonate. The hydrophobicity refers to a property that imparts a predetermined water permeability and moisture permeability described below to the stretched porous film.

As the fine filler having a hydrophobic surface, the fine powder that is hydrophobic by itself can be used as is. Also, fine powder that has been subjected to hydrophobization treatment can be used. As the fine powder, any of inorganic fine powder and organic fine powder can be used. The hydrophobization treatment can be performed by treating the surface of the fine powder with a surface treatment agent (hydrophobizing agent). The hydrophobization-treated fine powder has a hydrophobizing agent on its surface and the hydrophobicity is imparted by this hydrophobizing agent. One type of fine filler can be used alone, or two or more types of the fine fillers can be used in combination.

Specific examples of the inorganic fine powder include fine powders of heavy calcium carbonate, light calcium carbonate, calcined clay, talc, titanium oxide, barium sulfate, zinc oxide, magnesium oxide, diatomaceous earth, silicon oxides, and the like, and hollow glass beads. However, the inorganic fine powder is not particularly limited thereto. Among these, calcium carbonate, calcined clay, and diatomaceous earth are preferable because a number of voids can be formed at low cost during stretching and adjustment of the porosity is easy. Furthermore, heavy calcium carbonate and light calcium carbonate are more preferable because many types of commercial products are available and it is easy to obtain a product with a desired average particle size and particle size distribution. One type of these can be used alone, or two or more types of these can be used in combination.

As the organic fine powder, fine powder formed from a resin which is of a type different from the polyolefin-based resin that is the basic constituent of the stretched porous film, and which has a melting point or a glass transition point that is higher than the melting point or the glass transition point of the polyolefin-based resin can be used. When such an organic fine powder is used, immiscibility to the polyolefin-based resin of the basic constituent of the stretched porous film can be enhanced, and void formability during the stretch-forming tends to enhance. One type of these can be used alone, or two or more types of these can be used in combination.

Specific examples of the organic fine powder that can be used in the polyolefin-based resin that is the basic constituent of the stretched porous film include organic fine powder having a melting point (e.g. 170 to 300°C) or glass transition temperature (e.g. 170 to 280°C) that are higher than the melting point of the polyolefin-based resin that is the basic constituent and being immiscible to the polyolefin-based resin that is the basic constituent. Examples thereof include polyethylene terephthalate, polyethylene naphthalate, polybutylene terephthalate, polyamide, polycarbonate, polystyrene, cyclic olefin homopolymers, ethylene-cyclic olefin copolymers, polyethylene sulfide, polyimide, polymethacrylate, polyethyl ether ketone, polyethylene sulfide, polyphenylene sulfide, and melamine resin particles. However, the organic fine powder is not particularly limited thereto. One type of these can be used alone, or two or more types of these can be used in combination.

Examples of the hydrophobizing agent used for hydrophobization-treating the surfaces of these fine powders include organic carboxylic acids, such as fatty acids, alicyclic carboxylic acids, aromatic carboxylic acids, and resin acids, salts thereof, amides thereof, esters of these organic carboxylic acids and alcohols having from 1 to 6 carbons; poly(meth)acrylic acids; and silane coupling agents. However, the hydrophobizing agent is not particularly limited thereto. Among these, fatty acids and salts thereof are preferable. One type of these can be used alone, or two or more types of these can be used in combination.

Such a hydrophobizing agent easily enhances the hydrophobicity of the stretched porous film containing the hydrophobizing agent by modifying the surface of the fine powder described above to hydrophobize the fine filler.

Examples of the fatty acid include saturated fatty acids, such as caprylic acid, capric acid, lauric acid, myristic acid, palmitic acid, stearic acid, arachidic acid, behenic acid, and lignoceric acid; and unsaturated fatty acids, such as elaidic acid, palmitoleic acid, oleic acid, linoleic acid, linolenic acid, cetoleic acid, erucic acid, and ricinoleic acid. However, the fatty acid is not particularly limited thereto. Among these, fatty acids having from 8 to 24 carbons are preferable, fatty acids having from 12 to 20 carbons are more preferable, and oleic acid and stearic acid are even more preferable. Furthermore, examples of the salts of these organic carboxylic acids include metal salts of K, Na, Ag, Al, Ba, Ca, Cu, Fe, Li, Mg, Mn, Pb, Sn, Sr, or Zn. Among these, metallic soaps are preferable, metallic soaps of Al or Zn are more preferable, aluminum stearate and zinc stearate are even more preferable, and aluminum stearate is particularly preferable.

Examples of the silane coupling agent described above include 3-chloropropyltrimethoxysilane, vinyltrimethoxysilane, vinyltriethoxysilane, vinyltris(2-methoxyethoxy)silane, 3-methacryloxypropyltrimethoxysilane, 3-glycidoxypropyltrimethoxysilane, 3-mercaptopropyltrimethoxysilane, and 3-aminopropyltriethoxysilane. However, the silane coupling agent is not particularly limited thereto.

The presence of these hydrophobizing agents in the stretched porous film can be determined from, for example, the presence or absence of the peak derived from the hydrophobizing agent (e.g. peak of stearic acid) by mass spectrometry.

Note that the hydrophobizing agent contained in the polyolefin stretched porous film may be a hydrophobizing agent that is supported on the surface of the fine powder, a hydrophobizing agent that is dispersed in a system from the fine filler, or a hydrophobizing agent that is added separately to the polyolefin-based resin.

The content of the hydrophobizing agent relative to the total amount of the fine filler having a hydrophobic surface is not particularly limited but is preferably 0.01 mass% or greater, more preferably 0.1 mass% or greater, and even more preferably 0.15 mass% or greater. Furthermore, the content of the hydrophobizing agent relative to the total amount of the fine filler having a hydrophobic surface is not particularly limited but is preferably 15 mass% or less, more preferably 10 mass% or less, and even more preferably 6 mass% or less. Furthermore, the content of the hydrophobizing agent relative to the total amount of the stretched porous film is not particularly limited but is preferably 0.005 mass% or greater, more preferably 0.01 mass% or greater, and even more preferably 0.05 mass% or greater. Furthermore, the content of the hydrophobizing agent relative to the total amount of the stretched porous film is not particularly limited but is preferably 10 mass% or less, more preferably 8 mass% or less, and even more preferably 5 mass% or less. By setting the content of the hydrophobizing agent to a content not less than the lower limit described above, sufficient hydrophobization treatment can be performed on the fine filler, and water permeability of the stretched porous film thus tends to be suppressed. The content of the hydrophobizing agent is preferably not greater than the upper limit described above from the perspective of cost.

The hydrophobization treatment can be performed in accordance with a method in the related art, and the method thereof is not particularly limited. For example, the hydrophobization treatment can be performed by spraying, to the fine powder, the hydrophobizing agent as a solution or slurry of an organic solvent and agitating for a predetermined time. For another example, the hydrophobization treatment can be performed by adding a hydrophobizing agent into water slurry in which the fine powder is dispersed in water and agitating and mixing the mixture. In the case where the fine powder contains an alkaline earth metal, a compound having the chelating ability to the alkaline earth metal may be further added as a hydrophobizing agent. Furthermore, the hydrophobizing agent may be added as a slurry or solution of a water-soluble organic solvent to blend the hydrophobizing agent and water. The fine filler in the state after being agitated and mixed may be further dehydrated and dried to obtain a powder-like fine filler.

The hydrophobization treatment using the hydrophobizing agent can be performed by, for example, methods described in JP 11-349846 A, JP 2002-363443 A, WO 2001/027193, and WO 2004/006871.

The average primary particle size of the fine filler is typically 0.05 $\mu$m or greater, preferably 0.07 $\mu$m or greater, more preferably 0.1 $\mu$m or greater, and even more preferably 0.12 $\mu$m or greater. Furthermore, the average primary particle size of the fine filler is typically 0.8 $\mu$m or less, preferably 0.6 $\mu$m or less, more preferably 0.5 $\mu$m or less, and even more preferably 0.4 $\mu$m or less. The average primary particle size of the fine filler of not less than the lower limit described above tends to allow efficient formation of voids in the stretched porous film. Furthermore, the average primary particle size of the fine filler of not greater than the upper limit described above can allow a greater number of fine filler to be contained in the stretched porous film when the compounded amount is the same as the amount of the case where a filler with a greater particle size is used. As a result, the communicating voids tend to be formed more efficiently, the moisture permeability tends to be enhanced, and breaking of the film during the stretching due to contamination with large-sized particles tends to be suppressed.

Note that, in the present specification, the average primary particle size of the fine filler refers to the average value which is obtained by observing a cross section in the thickness direction of the stretched porous film by using an electron microscope, measuring each primary particle size of 100 particles of the fine filler chosen randomly from the observed region, and calculating based on these values. The primary particle size of the fine filler is determined from the maximum value of the distance between two points on the contour of a particle, i.e. maximum diameter.

The stretched porous film may contain, as the fine filler, secondary particle formed from the primary particles of the fine filler having the average primary particle size described above, and may contain both the secondary particles and the primary particles of the fine filler. Note that, the primary particle refers to a particle unit of a fine filler that is present by itself when the fine filler is dispersed. The secondary particle refers to an aggregate in the state where a plurality of primary particles are aggregated or bonded.

When the stretched porous film contains the secondary particles of the fine filler, the average particle size of the secondary particles (average secondary particle size) is preferably from 0.05 $\mu$m to 0.9 $\mu$m, more preferably from 0.15 $\mu$m to 0.8 $\mu$m, even more preferably from 0.25 $\mu$m to 0.6 $\mu$m, and particularly preferably from 0.25 $\mu$m to 0.5 $\mu$m. The formation of the communicating voids may be facilitated by the use of the fine filler containing the primary particles having the average primary particle size within the numerical range described above and the secondary particles having the average secondary particle size within the numerical range described above.

Note that, in the present specification, the average secondary particle size of the fine fillers refers to a median diameter ($D_{50}$) based on the volume of the fine filler measured by using a particle size distribution measuring device by the laser diffraction method. Furthermore, the average secondary particle size is the average value which is obtained by observing a cross section in the thickness direction of the stretched porous film by using an electron microscope, measuring secondary particle sizes of 100 particles chosen randomly from the observed region, and calculating based on these values. In this case, the secondary particle size of the fine filler is determined from the maximum value of the distance between two points on the contour of a particle (maximum diameter).

The stretched porous film may further contain a fine filler having a hydrophilic surface in the range that does not impair the water impermeability. The moisture permeability of the stretched porous film can be further enhanced by blending and using the fine filler having a hydrophilic surface. As the fine filler having a hydrophilic surface, the fine powder that is hydrophilic by itself can be used as is. Also, fine powder that has been subjected to hydrophilization treatment can be used. As the fine powder, the inorganic fine powder or organic fine powder described for the fine filler described above can be used. The hydrophilization treatment can be performed by treating the surface of the fine powder with a surface treatment agent (hydrophilizing agent). The hydrophilization-treated fine powder has a hydrophilizing agent on its surface and the hydrophilicity is imparted by this hydrophilizing agent.

The hydrophilization treatment with the hydrophilizing agent can be performed by, for example, the methods described in JP 8-231873 A and JP 2005-82756 A.

Examples of the hydrophilizing agent include polyphosphoric acid, hydrophilic silane coupling agents, hydrophilic polymers, hydrophilic polyhydric alcohols, and hydrophilic metal oxides. However, the hydrophilizing agent is not particularly limited thereto. Among these, a hydrophilic metal oxide is preferable. One type of these can be used alone, or two or more types of these can be used in combination.

Such a hydrophilizing agent modifies the surface of the fine powder described above to hydrophilize the fine filler, and thus easily enhances the hydrophilicity of the stretched porous film containing the hydrophilizing agent.

Examples of the hydrophilic silane coupling agent include $\gamma$-glycidoxypropyltrimethoxysilane, $\gamma$-mercaptopropyltrimethoxysilane, $\gamma$-aminopropyltriethoxysilane, and $\gamma$-ureidopropyltriethoxysilane. Examples of the hydrophilic polymer include polyvinyl alcohol, polyethylene glycol, polypropylene glycol, polyvinyl pyrrolidone, polyacrylic acid and salts thereof, polyacrylic acid derivatives; and homopolymers or copolymers of a monomer having a carboxylic acid group, a sulfonic acid group, a phosphoric acid group, a primary, secondary, or tertiary amino group, or a quaternary ammonium salt group. Examples of the hydrophilic polyhydric alcohol include diethylene glycol, and ethylene glycol, glycerin. Examples of the hydrophilic metal oxide include silicon oxide, aluminum oxide, zirconium dioxide, and cerium oxide.

The content of the hydrophilizing agent relative to the total amount of the fine filler having a hydrophilic surface is not particularly limited but is preferably 0.01 mass% or greater, more preferably 0.1 mass% or greater, and even more preferably 0.15 mass% or greater. Furthermore, the content of the hydrophilizing agent relative to the total amount of the fine filler having a hydrophilic surface is not particularly limited but is preferably 1.5 mass% or less, more preferably 1.0 mass% or less, and even more preferably 0.6 mass% or less. By setting the content of the hydrophilizing agent to a content not less than the lower limit described above, sufficient hydrophilization treatment can be performed on the fine filler, and moisture permeability of the stretched porous film thus tends to be enhanced. Furthermore, the content of the hydrophilizing agent is preferably not greater than the upper limit described above from the perspective of easily achieving the communicating void fraction of the stretched porous film.

The stretched porous film preferably contains both the secondary particles of the fine filler having a hydrophobic surface and the primary particles of the fine filler having a hydrophilic surface. The average primary particle size of the fine filler having a hydrophilic surface is preferably 0.05 $\mu$m or greater, more preferably 0.07 $\mu$m or greater, and even more preferably 0.1 $\mu$m or greater. Furthermore, the average primary particle size of the fine filler having a hydrophilic surface is preferably 0.6 $\mu$m or less, more preferably 0.5 $\mu$m or less, and even more preferably 0.4 $\mu$m or less. The average primary particle size of the fine filler having a hydrophilic surface of not less than the lower limit described above tends to form voids. Furthermore, the average primary particle size of the fine filler having a hydrophilic surface of not greater than the upper limit described above tends to form fine voids through which water is less likely to be permeated. Furthermore, suitable moisture permeability is easily imparted to the stretched porous film by the combined use of such a fine filler having a hydrophilic surface.

The content of the fine filler relative to the total amount of the stretched porous film is not particularly limited but is preferably 32 mass% or greater, more preferably 39 mass% or greater, and even more preferably 44 mass% or greater. Furthermore, the content of the fine filler relative to the total amount of the stretched porous film is not particularly limited but is preferably 72 mass% or less, more preferably 62 mass% or less, and even more preferably 52 mass% or less. By setting the content of the fine filler to a content not less than the lower limit described above, the number of the voids increases and the formation of the communicating voids is facilitated, and the moisture permeability tends to be enhanced due to the porous structure. Furthermore, by setting the content of the fine filler to a content not less than the lower limit described above, the stretched porous film is easily stretch-formed, and the yield tends to be enhanced. Furthermore, by setting the content of the fine filler to a content not greater than the upper limit described above, breakage of the film during the stretching tends to be suppressed.

The content of the fine filler having a hydrophobic surface relative to the total amount of the stretched porous film is not particularly limited but is preferably 32 mass% or greater, more preferably 35 mass% or greater, and even more preferably 40 mass% or greater. Furthermore, the content of the fine filler having a hydrophobic surface relative to the total amount of the stretched porous film is not particularly limited but is preferably 72 mass% or less, more preferably 60 mass% or less, and even more preferably 50 mass% or less. By setting the content of the fine filler having a hydrophobic surface to a content not less than the lower limit described above, the moisture permeability tends to be enhanced due to the porous structure. Furthermore, by setting the content of the fine filler having a hydrophobic surface to a content not greater than the upper limit described above, the water permeability is easily suppressed.

The content of the fine filler having a hydrophilic surface relative to the total amount of the stretched porous film is not particularly limited but is preferably 0.05 mass% or greater, more preferably 0.1 mass% or greater, and even more preferably 0.5 mass% or greater. Furthermore, the content of the fine filler having a hydrophilic surface is not particularly limited but is preferably 10 mass% or less, more preferably 7 mass% or less, and even more preferably 5 mass% or less, relative to the total amount of the stretched porous film. By setting the content of the fine filler having a hydrophilic surface to a content not less than the lower limit described above, the moisture permeability is easily enhanced. Furthermore, by setting the content of the fine filler having a hydrophilic surface to a content not greater than the upper limit described above, the water impermeability is easily maintained.

When the fine filler having a hydrophobic surface and the fine filler having a hydrophilic surface are used together, a ratio of the content of the fine filler having a hydrophobic surface to the content of the fine filler having a hydrophilic surface contained in the stretched porous film is not particularly limited. However, a relatively greater amount of the fine filler having a hydrophobic surface is preferable from the perspective of ease in adjusting the water impermeability and the moisture permeability to predetermined water impermeability and moisture permeability. Specifically, the ratio of (content of fine filler having hydrophobic surface)/(content of fine filler having hydrophilic surface), in terms of mass, is preferably in a range of 99.5/0.5 to 85/15, more preferably in a range of 99/1 to 89/11, and even more preferably in a range of 98.5/1.5 to 92/8.

When the contents of the fine filler having a hydrophobic surface and the fine filler having a hydrophilic surface are within the ranges described above, the effect of water impermeability tends to be sufficiently ensured even in a case where the content of the hydrophilizing agent is greater than the content of the hydrophobizing agent relative to the total amount of the stretched porous film.

Note that the content of the fine filler having a hydrophobic surface relative to the total amount of the stretched porous film is easily calculated based on the mass of the fine filler (fine powder) before the hydrophobization treatment. Similarly, the content of the fine filler having a hydrophilic surface relative to the total amount of the stretched porous film is easily calculated based on the mass of the fine filler (fine powder) before the hydrophilization treatment.

Other additive

To the stretched porous film of the present embodiment, publicly known additives, such as dispersants, heat stabilizers, ultraviolet stabilizers, antioxidants, antiblocking agents, nucleating agents, lubricants, and coloring agents, may be blended as necessary. These additives are preferably blended in a proportion of 0.01 to 3 mass% per 100 mass% total of the film.

For example, the dispersant is used to highly disperse the fine filler in the film containing the polyolefin-based resin described above. When the fine filler in which secondary particles are formed is used, the fine filler is preferably highly dispersed in the state of the secondary particles. Examples of the dispersant include silane coupling agents, higher fatty acids such as oleic acid and stearic acid, metallic soaps, polyacrylic acid, polymethacrylic acid, and maleic anhydride-modified polypropylene or salts thereof.

The content of the dispersant is not particularly limited but is preferably from 0.01 to 3 mass% relative to the total amount of the film. By setting the content of the dispersant to 0.01 mass% or greater, the communicating voids are easily obtained because the fine filler is sufficiently dispersed, and the predetermined water permeability and moisture permeability tend to be achieved. Furthermore, by setting the content of the dispersant to 3 mass% or less, excellent film stretchability is achieved, and stretching breakage during formation tends to be suppressed. Note that the total amount of the hydrophobizing agent and the dispersant described above is preferably from 0.25 to 8 mass%, and more preferably from 0.3 to 6 mass%, relative to the total amount of the film.

Production of polyolefin stretched porous film

The method of producing the stretched porous film of the present embodiment is described below.

The stretched porous film of the present embodiment can be produced by various known methods in the related art, such as an internal paper-manufacturing method and a foaming method, and the production method thereof is not particularly limited. Here, the production method by the internal paper-manufacturing method is described in detail as a suitable production method that can provide a porous film at the same time as the stretch-forming.

Preparation of resin composition and formation of resin sheet

In the production of the stretched porous film by the internal paper-manufacturing method, a resin composition containing a polyolefin-based resin and a fine filler is prepared. Specifically, the resin composition can be prepared by blending the polyolefin-based resin, the fine filler, and, as necessary, various additives and melt-kneading the mixture. At this time, by setting the compounding proportion of each component of the resin composition to a preferable numerical range described above, a polyolefin stretched porous film with predetermined water permeability and moisture permeability tends to be obtained by the stretch-forming of the resin sheet described below.

The resin composition is then melt-extruded in a sheet shape to form a polyolefin-based resin sheet containing the fine filler in the inner part. The obtained polyolefin-based resin sheet is then stretched at least in one direction to obtain a stretched porous film of the present embodiment.

Stretching

Examples of the uniaxial stretching method include an inter-roll stretching (machine-direction stretching) method that performs stretching by using the difference in peripheral speeds of rolls in the transport direction of the resin sheet, and a clip stretching (transverse-direction stretching) method that performs stretching by using a tenter oven in the direction orthogonal to the transport direction of the resin sheet (width direction).

Examples of the biaxial stretching method include sequential biaxial stretching method that combines and uses the machine-direction stretching method described above and the transverse-direction stretching method described above. Another example is a simultaneous biaxial stretching method that simultaneously performs stretching in the transport direction of the resin sheet and stretching in the direction orthogonal to the transport direction of the resin sheet. More specifically, examples thereof include methods of simultaneous biaxial stretching methods using a combination of a tenter oven and a pantograph or a combination of a tenter oven and a linear motor. Furthermore, another example is a simultaneous biaxial stretching method by a tubular method, which is a stretching method of inflation films.

The stretching of the polyolefin-based resin sheet can be appropriately selected from the uniaxial machine-direction stretching, uniaxial transverse-direction stretching, sequential biaxial stretching, and simultaneous biaxial stretching described above, and the like. In the case where the polyolefin-based resin sheet is a laminate, the stretching methods of the layers may be all the same or the stretching methods of the layers may be different each other. When the stretching methods of the layers are different, the stretching method of each layer may be appropriately selected from the stretching methods described above. Among these, sequential biaxial stretching method and simultaneous biaxial stretching method are preferable, and sequential biaxial stretching method is more preferable.

The stretching ratio of the stretched porous film is not particularly limited and can be decided appropriately taking the characteristics of the resulting stretched porous film or the like into consideration. In an embodiment of the present invention, to form the predetermined communicating voids by using the polyolefin-based resin as the basic constituent, the stretching ratio during the uniaxial machine-direction stretching is preferably in a range of 3 to 11 times, more preferably in a range of 4 to 10 times, and even more preferably in a range of 5 to 7 times. The stretching ratio during the uniaxial transverse-direction stretching is preferably in a range of 4 to 11 times, more preferably in a range of 4 to 10 times, and even more preferably in a range of 5 to 9 times. The area stretching ratio during the sequential biaxial stretching or simultaneous biaxial stretching is preferably in a range of 10 to 90 times, more preferably in a range of 15 to 75 times, and even more preferably in a range of 30 to 60 times. By setting the stretching ratio to the range described above, stable stretch-forming is possible so that a uniform film thickness is achieved while stretching unevenness is prevented, the desired voids that communicate with the surface of the film are easily obtained, and the predetermined water permeability and moisture permeability tend to be achieved.

The stretching temperature of the stretched porous film is not particularly limited and is preferably a temperature that is higher than the crystallization temperature of the polyolefin-based resin which is the basic constituent and that is at least 5°C lower than the melting point, and more preferably at least 10°C lower than the melting point. Furthermore, when two or more types of resins are used, the stretching is preferably performed at a temperature that is higher than the crystallization temperature of the resin with the largest proportion of the content and that is at least 5°C lower than the melting point. For example, when a propylene homopolymer having the melting point of 155 to 167°C is used as the polyolefin-based resin, the stretching temperature is preferably from 100 to 162°C. Furthermore, when a high density polyethylene having the melting point of 121 to 136°C is used as the polyolefin-based resin, the stretching temperature is preferably from 70 to 131°C. Note that, after the stretching treatment, heat treatment at a temperature higher than the stretching temperature may be performed as necessary.

Heat treatment

The stretched porous film after the stretching is preferably subjected to heat treatment. The temperature of the heat treatment is preferably selected in a temperature range that is 0 to 30°C higher than the stretching temperature. Such heat treatment promotes crystallization of the amorphous portion of the polyolefin-based resin molecule, reduces the thermal shrinkage ratio in the stretched direction, and reduces tightening during product storage, waviness due to the tightening, and the like. The method of the heat treatment typically employs a roll heating or a heating oven, but a combination of these may be employed.

When the stretched porous film is stretch-formed, the transport speed in the case of the machine-direction stretching is typically from 10 to 500 m/min, preferably from 30 to 300 m/min, and more preferably from 50 to 200 m/min. Furthermore, the transport speed in the case of the transverse-direction stretching is typically from 10 to 150 m/min, preferably from 30 to 120 m/min, and more preferably from 50 to 100 m/min. Furthermore, the transport speed in the case of the sequential biaxial stretching is typically from 10 to 500 m/min, preferably from 30 to 300 m/min, and more preferably from 50 to 200 m/min. Furthermore, the transport speed in the case of the simultaneous biaxial stretching is typically from 3 to 350 m/min, preferably from 5 to 120 m/min, and more preferably from 5 to 100 m/min.

When the stretched porous film is a multilayer, a material that has been laminated by co-extrusion may be stretched at once. Furthermore, stretching may be performed again after the stretched layers are laminated. Furthermore, films obtained by the method described above may be adhered to each other to form the stretched porous film. Although the lamination can be performed after each layer is separately stretched, it is preferable to laminate the layers and then stretch the layers at once as described above because the number of steps is smaller, the step is simple, and the production cost is lower.

When the stretched porous film is a multilayer, the number of stretching axes of each layer constituting the stretched porous film may be uniaxial stretching or biaxial stretching, or the layer may be unstretched or unstretched yet. For example, in the case of the stretched porous film having two-layer structure of skin layer/core layer, the number of stretching axes of each layer may be any combination, such as unstretched/uniaxial, unstretched/biaxial, uniaxial/uniaxial, uniaxial/biaxial, and biaxial/biaxial.

Furthermore, for example, in the case of the stretched porous film having three-layer structure of surface skin layer/core layer/back skin layer, the number of stretching axes of each layer may be any combination, such as unstretched/uniaxial/unstretched, unstretched/biaxial/unstretched, unstretched/uniaxial/uniaxial, unstretched/uniaxial/biaxial, unstretched/biaxial/uniaxial, unstretched/biaxial/biaxial, uniaxial/uniaxial/uniaxial, uniaxial/uniaxial/biaxial, uniaxial/biaxial/uniaxial, uniaxial/biaxial/biaxial, and biaxial/biaxial/biaxial.

Surface treatment

The stretched porous film obtained after the stretching is preferably subjected to surface treatment described below. The surface treatment can adjust the surface of the stretched porous film so that the surface of the stretched porous film has a predetermined wetting tension described below. When the stretched porous film has the predetermined wetting tension described below, secondary processability thereof can be enhanced. The surface treatment can be performed by subjecting the film after the stretching to oxidation treatment, and also performed by applying an anchoring agent and an antistatic agent after the oxidation treatment is performed on the film after the stretching.

As the oxidation treatment method, one type or a combination of methods that are typically used for film treatment, such as corona discharge treatment, flame treatment, plasma treatment, glow discharge treatment, and ozone treatment, can be used. Among these, corona discharge treatment and flame treatment are preferable, and corona discharge treatment is particularly preferable from the perspective of equipment and ease of operation.

Examples of the anchoring agent include ethyleneimine adducts of polyimine-based polymer or polyamine polyamide that are used alone or as a mixture thereof, or a material in which a crosslinking agent is further added thereto. Examples of the ethyleneimine adducts of polyimine-based polymer or polyamine polyamide include polyethyleneimine, ethyleneimine adducts of poly(ethyleneimine-urea) and polyamine polyamide, or alkyl-modified products, cycloalkyl-modified products, aryl-modified products, allyl-modified products, aralkyl-modified products, benzyl-modified products, cyclopentyl-modified products, aliphatic cyclic hydrocarbon-modified products thereof, hydroxides thereof, or mixtures of a plurality of types of these.

Examples of the antistatic agent include polymer-based antistatic agents. As the polymer-based antistatic agent, a cation-based, anion-based, amphoteric, or nonion-based antistatic agent or the like can be used. Examples of the cation-based antistatic agent include antistatic agents having an ammonium salt structure or a phosphonium salt structure in the molecular structure. Examples of the anion-based antistatic agent include antistatic agents having alkali metal salts of sulfonic acid, phosphoric acid, carboxylic acid, or the like, e.g., antistatic agents having a structure of alkali metal salt of acrylic acid, methacrylic acid, (anhydrous) maleic acid, or the like (e.g. lithium salt, sodium salt, or potassium salt) in the molecular structure. The amphoteric antistatic agent is an antistatic agent having both the cation-based and anion-based structures described above in one molecule, and examples thereof include betaine-based antistatic agents. Examples of the nonion-based antistatic agent include ethylene oxide polymers having an alkylene oxide structure and polymers having an ethylene oxide polymer component in the molecular chain. In addition, examples thereof include polymer-based antistatic agents having boron in the molecular structure. Among these, cationic polymer-based antistatic agents are preferable, nitrogen-containing polymer-based antistatic agents are particularly preferable, and tertiary nitrogen- or quaternary nitrogen-(ammonium salt structure) containing acrylic polymers are particularly preferable.

Characteristics of polyolefin stretched porous film

In the stretched porous film of the present embodiment, a number of voids are formed in the inner part of the film of the polyolefin-based resin, and at least some of these voids form communicating voids that communicate each other. Furthermore, the voids and the communicating voids include fine fillers having surfaces that are hydrophobization-treated with a hydrophobizing agent. As a result, the stretched porous film has water impermeability that suppresses permeation of water to a degree that the stretched porous film exhibits the water permeability described below and has moisture permeability that allows permeation of water vapor to a degree that the stretched porous film exhibits the moisture permeability described below.

That is, the stretched porous film of the present embodiment can allow sufficient permeation of water vapor while water is hardly permeated. It is presumed that the stretched porous film exhibits such characteristics because at least some of the voids communicate with each other in the film and the water vapor can pass through the stretched porous film through the communicating voids from the opening on the film surface. Meanwhile, it is presumed that the permeation of water through the stretched porous film is suppressed because the infiltration of water to the communicating voids and permeation of water are suppressed due to the hydrophobicity of the olefin-based resin itself and the presence of the fine filler having a hydrophobic surface. Note that, when the fine filler having a hydrophilic surface is used together with the fine filler having a hydrophobic surface, the moisture permeability tends to be suitably enhanced.

The moisture permeability, gas permeability, and water permeability of the stretched porous film can be controlled by adjusting the particle size, content, and degree of hydrophobization treatment of the fine filler, combined use of the fine filler having a hydrophobic surface and the fine filler having a hydrophilic surface, the number of voids within the film, the degree of communication of the voids, or the size of the voids.

Note that, when the stretched porous film is a multilayer, all layers constituting the stretched porous film preferably contain a fine filler having a hydrophobic surface and having an average primary particle size of 0.05 to 0.8 $\mu$m. Furthermore, when the stretched porous film is a multilayer, as a whole of the plurality of layers, the desired water impermeability and moisture permeability can be achieved by satisfying the water permeability and the moisture permeability described below.

Thickness

The thickness of the stretched porous film refers to a value measured in accordance with JIS K 7130 (1999). When the stretched porous film is a multilayer, this value is a value measured for a whole of the plurality of layers. When the stretched porous film is a multilayer, the thickness of each layer is determined by observing a cross section thereof by using an electron microscope, determining the thickness ratio by determining the interface between layers from the appearance, and performing calculation based on the measured thickness and the thickness ratio of each layer.

The thickness of the stretched porous film may be set appropriately depending on the desired characteristics and is not particularly limited. When the stretched porous film is used as a material for agriculture, the thickness is preferably 20 $\mu$m or greater, more preferably 40 $\mu$m or greater, and even more preferably 50 $\mu$m or greater. Furthermore, the thickness of the stretched porous film is preferably 500 $\mu$m or less, more preferably 400 $\mu$m or less, and even more preferably 300 $\mu$m or less. The thickness of the stretched porous film of not less than the lower limit described above imparts sufficient mechanical strength to the stretched porous film and tends to prevent breakage of the film during the stretch-forming and application of the stretched porous film. Furthermore, with the thickness of the stretched porous film that is not greater than the upper limit described above, the weight of the stretched porous film does not become too heavy, and handling tends to be easier.

Density

The density of the stretched porous film is preferably 0.45 g/cm$^3$ or greater, more preferably 0.5 g/cm$^3$ or greater, and even more preferably 0.55 g/cm$^3$ or greater. Furthermore, the density of the stretched porous film is preferably 0.7 g/cm$^3$ or less, more preferably 0.65 g/cm$^3$ or less, and even more preferably 0.6 g/cm$^3$ or less. The density of the stretched porous film not less than the lower limit described above tends to prevent breakage of the film during the stretching and also tends to provide sufficient mechanical strength of the stretched porous film. The density of the stretched porous film not greater than the upper limit described above tends to generate voids communicating with the inner part of the film and tends to exhibit moisture permeability. The density of the stretched porous film can be controlled by adjusting the content of the fine filler, and the number of stretching axes and the stretching ratio of the film.

The density of the stretched porous film refers to a value obtained by using distilled water as an immersion liquid in accordance with the method A of JIS K 7112 (1999). Note that this density is equivalent to the density $\rho_w$ described below. The stretched porous film has a predetermined density due to the appropriate formation of the communicating voids in the film.

Void fraction

The void fraction of the stretched porous film refers to the proportion of the volume (volume fraction) occupied by the voids in the film relative to the volume of the entire film. Note that the volume fraction of all the voids in the film is referred to as "entire void fraction". Furthermore, among the voids in the film, the volume fraction of voids that are separated in the inner part of the film is referred to as "separate void fraction in the inner part". Furthermore, among the voids in the film, the volume fraction of voids that communicate with the surface of the film is referred to as "communicating void fraction".

The entire void fraction of the stretched porous film is determined by Equation (1) below.
[Equation 2]

$$\text{Entire void fraction (\%)} = \frac{\rho_0 - \rho_w}{\rho_0} \times 100 \qquad \text{Equation (1)}$$

In Equation (1), $\rho_0$ is a density of the film before stretching determined by using distilled water as an immersion liquid in accordance with the method A of JIS K 7112 (1999). $\rho_w$ is a density of the film after stretching determined by using distilled water as an immersion liquid in accordance with the method A of JIS K 7112 (1999).

Note that $\rho_0$, which indicates the density of the film having no voids before the stretching, is substantially the same as the true density indicating the density of the portion occupied by the resin composition containing the polyolefin-based resin and the fine filler, from which the void portion has been excluded from the film having the voids after the stretching.

Furthermore, because the interface between the communicating voids formed in the inner part of the stretched porous film of the present embodiment is hydrophobic, it is difficult for water to permeate the voids of the film inner part in a short period of time without application of pressure. Therefore, $\rho_w$ that is obtained by measurement by using distilled water as an immersion liquid in accordance with the method A of JIS K 7112 (1999) corresponds to the density of the film after the stretching based on the volume occupied by the voids present separately in the film inner part, the volume occupied by the voids communicating with the film surface, and the volume occupied by the film itself.

Therefore, as shown in Equation (1), the proportion of all the voids formed in the inner part of the stretched porous film relative to the entire film can be determined as the entire void fraction by using the difference between $\rho_0$ and $\rho_w$.

Then, the separate void fraction in the inner part of the stretched porous film is determined by Equation (2) below.

[Equation 3]

$$\text{Separate void fraction in inner part (\%)} = \frac{\rho_0 - \rho_s}{\rho_0} \times 100 \qquad \text{Equation (2)}$$

In Equation (2), the definition of $\rho_0$ is the same as the definition in Equation (1). $\rho_s$ is a density determined by using a liquid having a surface tension of 27.3 mN/m, in place of the distilled water, as an immersion liquid in accordance with the method A of JIS K 7112 (1999).

With this immersion liquid, the void that communicates from the surface to the inner part of the stretched porous film (communicating voids) can be filled because the surface of the target material tends to be wet although the surface is hydrophobic. On the other hand, even when the liquid having the surface tension of 27.3 mN/m is used, the void that does not communicate with the film surface (separate void in the inner part) remains as a void without being filled with this liquid. Therefore, $\rho_s$ that is obtained by measurement by using the liquid having the surface tension of 27.3 mN/m, in place of distilled water, as an immersion liquid in accordance with the method A of JIS K 7112 (1999) corresponds to the apparent density of the film after the stretching based on the volume occupied by the voids present separately in the film inner part and the volume occupied by the film itself. The liquid having the surface tension of 27.3 mN/m can be prepared in accordance with the composition described in the table in JIS K 6768 (1999) (mixing 80 vol.% methanol and 20 vol.% distilled water). Commercially available products, such as a product sold under the name of Wetting Tension Test Mixture, can be also used.

Therefore, as shown in Equation (2), the proportion of the voids that are formed in the inner part of the stretched porous film, that do not communicate with the outer part of the film, and that are present separately in the film inner part relative to the entire film can be determined as the separate void fraction in the inner part by using the difference between po and $\rho_s$.

The communicating void fraction of the stretched porous film is determined by Equation (3) below.

[Equation 4]

$$\text{Communicating void fraction (\%) = Entire void fraction (\%) - Separate void fraction in inner part (\%)}$$

$$= \frac{\rho_0 - \rho_w}{\rho_0} \times 100 - \frac{\rho_0 - \rho_s}{\rho_0} \times 100$$

$$= \frac{\rho_s - \rho_w}{\rho_0} \times 100 \qquad \text{Equation (3)}$$

When the void communicating with the surface of the stretched porous film is observed, the void is not filled with the distilled water but filled with the liquid having a surface tension of 27.3 mN/m. Therefore, as shown in Equation (3), the proportion of the voids communicating with the film surface relative to the entire film can be determined as the communicating void fraction by using the difference between the entire void fraction and the separate void fraction in the inner part.

The stretched porous film of the present embodiment suppresses excessive water permeation while allowing water vapor to permeate due to exhibition of appropriate moisture permeability and water impermeability. This is achieved by the presence of an appropriate proportion of the communicating voids among all the voids formed in the film. That is, an appropriate range exists for the value of (communicating void fraction/entire void fraction) which indicates the ratio of the communicating void fraction to the entire void fraction. This (communicating void fraction/entire void fraction) is represented by Equation (4) below.

[Equation 5]

$$\frac{\text{Communicating void fraction (\%)}}{\text{Entire void fraction (\%)}} = \frac{\frac{\rho_s - \rho_w}{\rho_0} \times 100}{\frac{\rho_0 - \rho_w}{\rho_0} \times 100} = \frac{\rho_s - \rho_w}{\rho_0 - \rho_w} \qquad \text{Equation (4)}$$

In the stretched porous film of the present embodiment, the value of (communicating void fraction/entire void fraction) is preferably from 0.4 to 0.85, more preferably from 0.5 to 0.8, and even more preferably from 0.6 to 0.75. By setting the value to be within the range described above, the predetermined moisture permeability tends to be achieved. The value of (communicating void fraction/entire void fraction) of the stretched porous film can be controlled by adjusting the content of the used fine filler, the particle size of the fine filler, the stretching ratio of the stretched porous film, and the like.

Furthermore, the entire void fraction of the stretched porous film is preferably from 40 to 80%, more preferably from 50 to 70%, and even more preferably from 55 to 65%. Furthermore, the separate void fraction in the inner part is preferably from 5 to 50%. Furthermore, the communicating void fraction is preferably from 30 to 75%, more preferably from 35 to 65%, and even more preferably from 40 to 60%.

The difference between the density $\rho_s$ and the density $\rho_w$, which are the numerator of Equation (4) above ($\rho_s - \rho_w$), indicates the difference between the density $\rho_w$ measured by using distilled water in the method A of JIS K 7112 (1999) and the density $\rho_s$ measured by using the liquid having the surface tension of 27.3 mN/m in place of the distilled water.

In the stretched porous film of the present embodiment, the value of $\rho_s - \rho_w$ is preferably from 0.15 to 1.15, more preferably from 0.3 to 1.0, and even more preferably from 0.5 to 0.9. The difference of the densities of not less than the lower limit described above tends to facilitate exhibition of the moisture permeability. The difference of the densities of not greater than the upper limit described above tends to suppress the moisture permeability.

Water permeability

The water permeability of the stretched porous film of the present embodiment indicates "water impermeability" in the description of the objects described above. Furthermore, this water permeability indicates that almost no water is passed through in the case of using the film as a material for agriculture or the like. Furthermore, this water permeability refers to a water permeability measured in accordance with JIS Z 0221 (1976).

The water permeability of the stretched porous film is 10000 seconds or greater, preferably 12000 seconds or greater, more preferably 14000 seconds or greater, and even more preferably 20000 seconds or greater. Furthermore, the water permeability of the stretched porous film is 85000 seconds or less, preferably 78000 seconds or less, more preferably 70000 seconds or less, and even more preferably 50000 seconds or less. The water permeability of not less than the lower limit describe above tends to suppress permeation of water. Furthermore, although a greater value of the water permeability indicates water impermeability, even when the water permeability is not greater than the upper limit described above, the water impermeability can be sufficiently ensured. The water permeability of the stretched porous film can be controlled by the communicating void fraction which is obtained by adjusting the content and the particle size of the fine filler, and the stretching ratio of the film. Furthermore, the moisture permeability can be also controlled by adjusting the contents of the fine filler having a hydrophobic surface and/or the fine filler having a hydrophilic surface, and the ratio of these contents.

Moisture permeability

The moisture permeability of the stretched porous film of the present embodiment indicates "appropriate moisture permeability" in the description of the objects described above. Furthermore, this moisture permeability indicates that, when the water vapor pressure on one side of the film is high, the water vapor is immediately transported to the other side of the film to avoid dew condensation due to excessive moisture in the internal space in the case of using the film as a material for agriculture or the like. Furthermore, this moisture permeability refers to a moisture permeability measured in a condition at a temperature of 40°C and a relative humidity of 90% in accordance with JIS Z 0208 (1976).

The moisture permeability of the stretched porous film is 700 g/m$^2$·24 hr or greater, preferably 800 g/m$^2$·24 hr or greater, and more preferably 1000 g/m$^2$·24 hr or greater. Furthermore, the moisture permeability of the stretched porous film is 2500 g/m$^2$·24 hr or less, preferably 2400 g/m$^2$·24 hr or less, and more preferably 2000 g/m$^2$·24 hr or less. The moisture permeability of not less than the lower limit described above allows easy permeation of water vapor through the stretched porous film and tends to prevent the water vapor from remaining in an internal space covered with the stretched porous film. Furthermore, the moisture permeability of not greater than the upper limit tends to achieve both the moisture permeability and the water impermeability. The moisture permeability of the stretched porous film can be controlled by the communicating void fraction which is obtained by adjusting the content and the particle size of the fine filler, and the stretching ratio of the film. Furthermore, the moisture permeability can be also controlled by adjusting the contents of the fine filler having a hydrophobic surface and/or the fine filler having a hydrophilic surface, and the ratio of these contents.

Gas permeability

The gas permeability of the stretched porous film of the present embodiment indicates appropriate gas permeation so that respiration of plant, nitrogen fixation by root nodule bacteria, and the like are not inhibited in the case of using the film as a material for agriculture or the like and indicates a gas permeability measured in accordance with JIS P 8117 (2009). The gas permeability of the stretched porous film is preferably 5000 seconds or greater, and more preferably 10000 seconds or greater. Furthermore, the gas permeability of the stretched porous film is preferably 85000 seconds or less, and more preferably 75000 seconds or less. When the gas permeability of the stretched porous film is within the range described above, appropriate gas permeability is achieved.

Wetting tension

In a case where the stretched porous film of the present embodiment is used as a material for agriculture or the like, a material obtained by subjecting the stretched porous film to adhering process with another component such as nonwoven fabric in advance and/or a material obtained by subjecting the stretched porous film to printing process by which the trade name or the like is printed on the surface may be sold as a commercial product.

The wetting tension of the stretched porous film is a characteristic that facilitates the secondary processing, such as adhering processing or offset printing of the stretched porous film. The wetting tension is determined by applying a plurality of wetting tension evaluation ink pens having dyne levels that are different each other (available from Corona Supplies Ltd., UK) in a condition at 23°C and a relative humidity of 50%, then determining whether the ink in the liquid membrane state approximately 2 seconds after the application is soaked or repelled, and determining the wetting tension from a dyne level of a threshold.

As the wetting tension of the stretched porous film, the surface tension is preferably 31 mN/m or greater, and more preferably 33 mN/m or greater. Furthermore, as the wetting tension of the stretched porous film, the surface tension is preferably 42 mN/m or less, and more preferably 37 mN/m or less. The surface tension of not less than the lower limit described above is preferable from the perspective of processability because adhesive agents, coating materials, and the like tend not to be repelled during secondary processing. Furthermore, the surface tension of not greater than the upper limit described above is preferable because water resistance of the film surface is exhibited and excellent image tends to be formed while dampening water is not spread in the case where the film surface is printed by offset printing.

Use of polyolefin stretched porous film

The stretched porous film of the present embodiment has the communicating voids that have the fine filler having a hydrophobic surface therein, suppresses water permeability, and exhibits excellent moisture permeability. As a result, the stretched porous film of the present embodiment can be widely and effectively used in the fields that require suppression of water permeation and promotion of water vapor permeation. Furthermore, due to the formed communicating voids, the stretched porous film can be also used in the fields that require gas permeability. Furthermore, in the embodiment that uses inorganic fine powder having a hydrophobized surface as the fine filler, opacity and light diffusion/reflection can be imparted, and thus such a stretched porous film can be used in the fields that require these characteristics, such as a field that requires coloring of fruits.

Examples of the use of the stretched porous film of the present embodiment include materials for agriculture, such as mulching films, films for hothouse, packaging bags for vegetables, and packaging bags for fruits; materials for medical use, such as sterilized/disinfected packaging materials, fabric for medical use, packaging materials for medical devices, operating gowns, and medical gloves; packaging materials for disposable heating pads, dehumidifying agents for household use, drying agents, oxygen scavengers, freshness keeping agents, and the like; sanitary materials, such as disposable diapers and sanitary products; and building materials, such as wallpaper and housewrap. Among these, by covering soils of the cultivated field, the stretched porous film can be suitably used as a mulching film for agriculture that provides proper environment for cultivation of crops because the stretched porous film provides water impermeability for preventing fertilizer from flowing out and appropriate moisture permeability that exhibits sufficient moisture retention for roots while excessive water vapor is allowed to escape from the cultivated field.

Examples

The present invention will be described more specifically below while citing production examples and examples.

Note that the materials, used amounts, proportions, treatment contents, treatment procedures, and the like described in the examples below may be varied as appropriate provided that they do not deviate from the spirit of the present invention. Therefore, the present invention is not limited to the examples below.

Evaluation methods

The evaluation of the stretched porous films obtained in the examples and the comparative examples were performed by the methods described below.

Water permeability

The water permeability of stretched porous film obtained in each of the examples and the comparative examples was measured in a condition at a temperature of 40°C and a relative humidity of 90% in accordance with JIS Z 0221 (1976).

Moisture permeability

The moisture permeability of stretched porous film obtained in each of the examples and the comparative examples was measured in a condition at a temperature of 40°C and a relative humidity of 90% in accordance with JIS Z 0208 (1976).

Gas permeability

The gas permeability of stretched porous film obtained in each of the examples and the comparative examples was measured in accordance with JIS P 8117 (2009).

Average primary particle size of fine filler

For the average primary particle size of the fine filler contained in the stretched porous films obtained in each of the examples and the comparative examples, a cross section of the stretched porous film was observed by using an electron microscope, then a maximum value of the distance between two points on the contour of each primary particle (maximum diameter) of 100 particles of fine filler chosen randomly was determined, and the average value thereof was used as the average primary particle size.

Average secondary particle size of fine filler

When the fine filler was an aggregate, a median diameter ($D_{50}$) was used as the average secondary particle size. The median diameter was determined, based on the volume, by moistening with methanol the fine filler that had undergone surface treatment, then producing a slurry by dispersing the fine filler in water, and measuring the slurry by using a laser diffraction particle size distribution measurement apparatus (SALD-2200, available from Shimadzu Corporation).

Wetting tension

The wetting tension of the stretched porous film obtained in each of the examples and the comparative examples was determined by applying a plurality of wetting tension evaluation ink pens having dyne levels that were different each other (available from Corona Supplies Ltd., UK) in a condition at 23°C and a relative humidity of 50%, then determining whether the ink in the liquid membrane state approximately 2 seconds after application was soaked or repelled, and determining the wetting tension from a dyne level of a threshold.

Density

The density $\rho_w$ of the stretched porous film obtained in each of the examples and the comparative examples was measured using distilled water as an immersion liquid in a condition at a temperature of 23°C in accordance with the method A of JIS K 7112 (1999).

Entire void fraction

For the stretched porous film obtained in each of the examples and the comparative examples, the density $\rho_0$

of a pellet of the resin composition before the stretching was measured using distilled water as an immersion liquid in accordance with the method A of JIS K 7112 (1999). The entire void fraction was calculated using the density $\rho_w$ and the density $\rho_0$ in Equation (1) above.

Communicating void fraction

The density $\rho_s$ of the stretched porous film obtained in each of the examples and the comparative examples was determined using a commercially available liquid having a surface tension of 27.3 mN/m (trade name: Wetting Tension Test Mixture No. 27.3, available from Wako Pure Chemical Industries, Ltd.) in place of the distilled water as the immersion liquid in the method A of JIS K 7112 (1999). The communicating void fraction was calculated using the density $\rho_s$ and the density $\rho_w$ in Equation (3).

Ratio of communicating void fraction to entire void fraction

Using the communicating void fraction and the entire void fraction, the ratio of the communicating void fraction to the entire void fraction (communicating void fraction/entire void fraction) was calculated by Equation (4).

$$\rho_s - \rho_w$$

For the stretched porous film obtained in each of the examples and the comparative examples, $\rho_s - \rho_w$ was calculated using the density $\rho_s$ and the density $\rho_w$.

Preparation of fine filler

Preparation Example 1 of fine filler having hydrophobic surface

To 10000 g of light calcium carbonate fine powder (trade name: Brilliant 1500, available from Shiraishi Calcium Co., Ltd; not surface-treated; average primary particle size: 0.15 $\mu$m), while the light calcium carbonate fine powder was being agitated by a kneader, a dispersion liquid in which 15.0 g of zinc stearate (trade name: ZP, available from Dainichi Chemical Industry Co., Ltd) as a hydrophobizing agent was dispersed in 100 mL of methanol was added and agitated for 30 minutes. The mixture obtained by the agitation was dried at 80°C for 1 hour to obtain a fine filler (A) of a Blending Example (a) of resin compositions of Table 1. Furthermore, fine fillers (A) of Blending Examples (b) to (d) of resin compositions were obtained in the same manner as in preparation example of the fine filler (A) used in the Blending Example (a) of resin compositions except for changing the compounding proportion of the fine powder and the hydrophobizing agent to the compounding proportions shown for Blending Examples (b) to (d) of resin compositions of Table 1. The fine fillers (A) used in Blending Examples (a) to (d) of resin compositions formed aggregates, and all the average secondary particle sizes were 0.7 $\mu$m.

Preparation Example 2 of fine filler having hydrophobic surface

Fine fillers (A) of Blending Examples (e) to (n), (v), and (y) to (zz) of resin compositions were obtained in the same manner as in Preparation Example 1 except for using aluminum stearate (trade name: aluminum stearate 900, available from NOF Corporation) as the hydrophobizing agent in place of the zinc stearate of Preparation Example 1 described above and changing the compounding proportion of the fine powder and the hydrophobizing agent to compounding proportions shown for Blending Examples (e) to (n), (v), and (y) to (zz) of resin compositions of Table 1. The fine fillers (A) used in Blending Examples (e) to (n), (v), and (y) to (zz) of resin compositions formed aggregates, and all the average secondary particle sizes were 0.7 $\mu$m.

Preparation Example 3 of fine filler having hydrophobic surface

Commercially available heavy calcium carbonate (trade name: CALTEX 5, available from Maruo Calcium Co., Ltd.; average primary particle size: 0.9 $\mu$m) was used as is as the fine filler (B) of Blending Examples (o) to (u), (y), and (z) of Table 1. This product was a heavy calcium carbonate that had been surface-treated with aluminum stearate in a compounding proportion of 10000:15.

Preparation Example 4 of fine filler having hydrophobic surface

Commercially available titanium dioxide (trade name: TIPAQUE A-100, available from Ishihara Sangyo Kaisha, Ltd.; average primary particle size: 0.15 μm) was used as is as the fine filler (C) used in Blending Examples (a) and (b) of resin compositions of Table 1. This product was a titanium dioxide that had been surface-treated with stearic acid in a compounding proportion of 95:5.

Preparation Example 1 of fine filler having hydrophilic surface

Commercially available titanium dioxide (trade name: TIPAQUE CR60, available from Ishihara Sangyo Kaisha, Ltd.; average primary particle size: 0.21 μm) was used as is as the fine filler (D) used in Blending Examples (c) to (r), (u), (v), and (y) to (zz) of resin compositions of Table 1. This product was a rutile titanium dioxide that had been surface-treated with aluminum hydroxide in a compounding proportion of 95:5.

Preparation Example 2 of fine filler having hydrophilic surface

Commercially available hydrophilic surface-treated calcium carbonate (trade name: AFF-Z, available from Fimatec Ltd.; average primary particle size: 1.0 μm) was used as is as the fine filler (E) used in Blending Examples (s), (t), (w), and (x) of resin compositions of Table 1. This product was a heavy calcium carbonate that had been surface-treated with a diallylamine copolymer and sodium alkylbenzenesulfonate in a compounding proportion of 100:4.8.

[Table 1]

| Type | | Content | | (a) | (b) | (c) | (d) | (e) | (f) | (g) | (h) | (i) | (j) | (k) | (l) | (m) | (n) | (o) | (p) | (q) | (r) | (s) | (t) | (u) | (v) | (w) | (x) | (y) | (z) | (zz) |
|---|---|---|---|---|---|---|---|---|---|---|---|---|---|---|---|---|---|---|---|---|---|---|---|---|---|---|---|---|---|---|
| | | | | | | | | | | | | | | | | | | Resin composition blending example (mass%) | | | | | | | | | | | | |
| Polyolefin-based resin | (A) | Crystalline polypropylene trade name: NOVATEC PP MA-3 available from Japan Polypropylene Corporation MFR(JIS K7210): 11g/10min | | 27.75 | 53.85 | 27.75 | 53.85 | 27.75 | 53.85 | 28.26 | 54.77 | 27.25 | 53.35 | 7.25 | 30.95 | 59.75 | 59.15 | 27.75 | 56.02 | 40.75 | 65.85 | 61.05 | 61.05 | 63.75 | 42.25 | 31.13 | 65.03 | 58.32 | 58.2 | 20.3 |
| | (B) | Crystalline polypropylene trade name: NOVATEC PP EA-9 available from Japan Polypropylene Corporation MFR(JIS K7210): 0.5g/10min | | 25 | - | 25 | - | 25 | - | 30 | - | 20 | - | 20 | - | - | - | 25 | - | 30 | - | 8 | 8 | 10 | 6 | 2 | 3 | - | - | - |
| | (C) | High density polyethylene trade name: NOVATEC HD HJ580N available from Japan Polyethylene Corporation MFR(JIS K7210): 12g/10min | | 2 | - | 2 | - | 2 | - | 2 | - | 2 | - | 2 | - | 2 | - | 2 | - | 2 | - | - | - | 2 | 2 | - | - | - | - | - |
| | (D) | Maleic acid-modified polypropylene trade name: MODIC P908 available from Mitsubishi Chemical Corporation MFR(JIS K7210): 45g/10min | | - | 0.8 | - | 0.8 | - | 0.8 | - | 1 | - | 0.6 | - | 1 | - | 1 | - | 0.8 | - | 1.2 | - | - | - | - | - | - | 0.8 | 0.8 | 0.8 |
| | (E) | Maleic acid-modified polypropylene trade name: UMEX 1001 available from Sanyo Chemical Industries, Ltd. acid value:26mg/g, softing point(JIS K2531):154℃ | | - | - | - | - | - | - | - | - | - | - | - | - | - | - | - | - | - | - | 1 | 1 | - | - | 2 | 2 | - | - | - |
| Fine filler | (A) | Light calcium carbonate fine powder trade name: BRILLIANT 1500 available from Shiraishi Calcium Co., Ltd. average primary particle size: 0.15µm | | 39.94 | 42.27 | 39.94 | 42.27 | 39.94 | 42.27 | 34.94 | 41.56 | 44.93 | 42.56 | 64.89 | 63.4 | 32.95 | 38.95 | - | - | - | - | - | - | - | 44.93 | - | - | 22.8 | 7.6 | 78 |
| | | Hydrophobizing agent | zinc stearate | 0.06 | 2.23 | 0.06 | 2.23 | - | - | - | - | - | - | - | - | - | - | - | - | - | - | - | - | - | - | - | - | - | - | - |
| | | Hydrophobizing agent | aluminum stearate | - | - | - | - | 0.06 | 2.23 | 0.05 | 2.02 | 0.07 | 2.44 | 0.11 | 3.6 | 0.05 | 0.05 | - | - | - | - | - | - | - | 0.07 | - | - | 1.2 | 0.4 | 0.05 |
| | (B) | Heavy calcium carbonate fine powder trade name: CALTEX 5 available from Maruo Calcium Co., Ltd. average primary particle size: 0.9µm | | - | - | - | - | - | - | - | - | - | - | - | - | - | - | 39.94 | 42.27 | 23.96 | 32.05 | 6.99 | 17.97 | 22.96 | - | - | - | 16 | 32.1 | - |
| | | Hydrophobizing agent | aluminum stearate | - | - | - | - | - | - | - | - | - | - | - | - | - | - | 0.06 | 0.06 | 0.04 | 0.05 | 0.01 | 0.03 | 0.04 | - | - | - | 0.03 | 0.05 | - |
| | (C) | Titanium dioxide fine powder trade name: TIPAQUE A100 available from Ishihara Sangyo Kaisya, Ltd. average primary particle size: 0.15µm | | 4.75 | 0.57 | - | - | - | - | - | - | - | - | - | - | - | - | - | - | - | - | - | - | - | - | - | - | - | - | - |
| | | Hydrophobizing agent | stearic acid | 0.25 | 0.03 | - | - | - | - | - | - | - | - | - | - | - | - | - | - | - | - | - | - | - | - | - | - | - | - | - |
| | (D) | Titanium dioxide fine powder trade name: TIPAQUE CR60 available from Ishihara Sangyo Kaisya, Ltd. average primary particle size: 0.21µm | | - | - | 4.75 | 0.57 | 4.75 | 0.57 | 4.28 | 0.38 | 5.23 | 0.76 | 5.23 | 0.76 | 4.75 | 0.57 | 4.75 | 0.57 | 2.85 | 0.57 | - | - | 0.95 | 4.28 | - | - | 0.57 | 0.57 | 0.57 |
| | | Hydrophilizing agent | aluminum hydroxide | - | - | 0.25 | 0.03 | 0.25 | 0.03 | 0.22 | 0.02 | 0.27 | 0.04 | 0.27 | 0.04 | 0.25 | 0.03 | 0.25 | 0.03 | 0.15 | 0.03 | - | - | 0.05 | 0.22 | - | - | 0.03 | 0.03 | 0.03 |
| | (E) | Heavy calcium carbonate fine powder trade name: AFF-Z available from Fimatec Ltd. average primary particle size: 1.0µm | | - | - | - | - | - | - | - | - | - | - | - | - | - | - | - | - | - | - | 21.9 | 11.4 | - | - | 61.9 | 28.6 | - | - | - |
| | | Hydrophilizing agent | diallylamine copolymer sodium alkylbenzensulfonate | - | - | - | - | - | - | - | - | - | - | - | - | - | - | - | - | - | - | 1.05 | 0.55 | - | - | 2.97 | 1.37 | - | - | - |
| Dispersant | (A) | Linear higher fatty acid (oleic acid) trade name: LUNAC OA available from KAO Corporation | | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | 0.25 | - | - | 0.25 | 0.25 | - | - | 0.25 | 0.25 | 0.25 |

Production of resin composition

The raw materials shown in Blending Example (a) of the resin composition of Table 1 were mixed in the compounding proportions shown in the same table to obtain a raw material mixture (a). The raw material mixture (a) was melt-kneaded by using a twin-screw kneader set at 210°C, then extruded in a strand shape from an extruder set at 230°C, and cooled. Then, the raw material mixture was cut by using a strand cutter to produce a pellet of resin composition (a). This pellet of the resin composition (a) was produced in the production examples of a stretched porous film described below. In the same manner as in the production example of the resin composition (a), the raw materials shown in Blending Examples (b) to (zz) of the resin composition of Table 1 were used in compounding proportions shown in the same table to produce pellets of resin compositions (b) to (zz).

Production of stretched porous film

Production Example 1 of stretched porous film

The resin composition (a) was used for a core layer and the resin composition (b) was used for a front skin layer and a back skin layer. These were respectively melt-kneaded using three extruders set at 250°C and these were introduced into a co-extrusion T-die, laminated in the die to form front skin layer/core layer/back skin layer, extruded in a sheet shape, and then cooled to 80°C by using a cooling device to obtain an unstretched three-layer laminated resin sheet.

This unstretched three-layer laminated resin sheet was heated to 142°C, then uniaxially stretched at the stretching ratio of 5 times in the transport direction (machine direction) of the resin sheet by the inter-roll stretching method that utilized the difference in peripheral speeds among multiple rolls, and then cooled to 60°C to obtain a uniaxially stretched resin film.

Thereafter, the uniaxially stretched resin film was heated again to 162°C using a tenter oven, then stretched at the stretching ratio of 8 times in the width direction (transverse direction) of the resin sheet by the clip stretching method using a tenter stretching machine at 155°C, and then heat-treated for 2 seconds by heating to 160°C in an oven while the film was held with the clip. Thereafter, the film was cooled to 60°C, and the edges were slit to obtain a sequentially biaxially stretched three-layer (biaxial/biaxial/biaxial) porous film of Production Example 1. The transport speed of the stretched resin film was controlled to 120 m/min.

Production Examples 2 to 7 and 12 to 14 of stretched porous films

Stretched porous films of Production Examples 2 to 7 and 12 to 14 were obtained by using the resin compositions shown in Table 2 and the stretching conditions shown in Table 2, in the same manner as for the stretched porous film of Production Example 1.

Production Example 8 of stretched porous film

The resin composition (j) for the core layer was melt-kneaded by an extruder set at 250°C, extruded in a sheet shape from a T-die, and cooled to 80°C by a cooling device to obtain an unstretched resin sheet.

This unstretched monolayer resin sheet was heated to 142°C, then uniaxially stretched at the stretching ratio of 5 times in the transport direction (machine direction) of the resin sheet by the inter-roll stretching method that utilized the difference in peripheral speeds among multiple rolls, and then cooled to 60°C to obtain a uniaxially stretched resin film.

Thereafter, the uniaxially stretched resin film was heated again to 162°C using a tenter oven, then stretched at the stretching ratio of 8 times in the direction orthogonal to the transport direction (transverse direction) of the resin sheet by the clip stretching method using a tenter stretching machine at 155°C, and then heat-treated for 4 seconds by heating to 165°C in an oven while the film was held with the clip. Thereafter, the film was cooled to 60°C, and the edges were slit to obtain a sequentially biaxially stretched monolayer porous film of Production Example 8.

Production Examples 9, 15, 16, and 19 to 21 of stretched porous films

Stretched porous films of Production Examples 9, 15, 16, and 19 to 21 were obtained by using the resin compositions shown in Table 2 and the stretching conditions shown in Table 2, in the same manner as for the stretched porous film of Production Example 8.

Production Example 10 of stretched porous film

The resin composition (k) for the core layer was melt-kneaded by an extruder set at 250°C, extruded in a sheet shape from a T-die, and cooled to 80°C by a cooling device to obtain an unstretched resin sheet.

This unstretched monolayer resin sheet was heated to 140°C, then uniaxially stretched at the stretching ratio of 5 times in the transport direction (machine direction) of the resin sheet by the inter-roll stretching method that utilized the difference in peripheral speeds among multiple rolls, and then cooled to 60°C to obtain a uniaxially stretched resin film.

Thereafter, the resin composition (1) for the skin layer was melt-kneaded by two extruders set at 250°C, extruded in sheet shapes from T-dies, and laminated on the both sides of the uniaxially stretched resin film described above to obtain a laminate having a three-layer structure.

Thereafter, the three-layer laminate was heated again to 162°C using a tenter oven, then stretched at the stretching ratio of 8 times in the width direction (transverse direction) of the resin sheet by the clip stretching method using a tenter stretching machine at 155°C, and then heat- treated for 2 seconds by heating to 160°C in an oven while the film was held with the clip. Thereafter, the film was cooled to 60°C, and the edges were slit to obtain a sequentially biaxially stretched three-layer (uniaxial/biaxial/uniaxial) porous film of Production Example 10. The transport speed of the stretched resin film was controlled to 120 m/min.

Production Example 17 of stretched porous film

A stretched porous film of Production Example 17 was obtained by using the resin composition shown in Table 2 and the stretching condition shown in Table 2, in the same manner as for the stretched porous film of Production Example 10.

Production Example 11 of stretched porous film

The resin composition (1) for the core layer was melt-kneaded by an extruder set at 250°C, extruded in a sheet shape from a T-die, and cooled to 80°C by a cooling device to obtain an unstretched resin sheet.

Thereafter, this unstretched monolayer resin sheet was heated again to 162°C using a tenter oven, then stretched at the stretching ratio of 8 times in the width direction (transverse direction) of the resin sheet by the clip stretching method using a tenter stretching machine at 155°C, and then heat-treated for 2 seconds by heating to 160°C in an oven while the film was held with the clip. Thereafter, the film was cooled to 60°C, and the edges were slit to obtain a monolayer stretched porous film which was uniaxially stretched in the transverse direction of Production Example 11. The transport speed of the resin sheet and the stretched resin film was controlled to 120 m/min.

Production Example 18 of stretched porous film

A stretched porous film of Production Example 18 was obtained by using the resin composition shown in Table 2 and the stretching condition shown in Table 2, in the same manner as for the stretched porous film of Production Example 11.

Production Example 22 of stretched porous film

Although an attempt was made to obtain a stretched porous film using the resin composition (zz) and the stretching condition shown in Table 2, in the same manner as for the stretched porous film of Production Example 8, a stretched porous film was not stably obtained because film breakage occurred frequently when stretching is performed in the width direction (transverse direction) of the resin sheet by a clip stretching method using a tenter stretching machine. Therefore, the evaluation described below was not performed for the stretched porous film of Production Example 22.

Example 1

On the both sides of the stretched porous film of Production Example 1, corona discharge treatment was performed continuously by using a corona discharge treatment device (instrument name: HF400F, available from Kasuga Electric Works Ltd.). As the treatment conditions, an aluminum discharge electrode having a length of 0.8 m and a silicone-covered roll as an insulating roll were used, the gap between the discharge electrode and an insulating roll was set to 5 mm, a line treatment speed was set to 15 m/min, applied energy density was set to 4200 $J/m^2$. Thereafter, the surface treatment agent described below was applied to the film by using a metal nip roll, and then the film was hot air-dried at 80°C and wound up in a roll shape. The stretched porous film of Example 1 was obtained by subjecting the stretched porous film of Production Example 1 to the surface treatment as described above.

As the surface treatment agent, an aqueous solution containing 0.5 mass% in terms of solid content of quaternary ammonium salt-based polymer (trade name: SAFTOMER ST-1000, available from Mitsubishi Chemical Corporation), 0.5 mass% in terms of solid concentration of propylene oxide-modified polyethyleneimine (trade name: Epomin PP-061, available from Nippon Shokubai Co., Ltd.), and 0.5 mass% in terms of solid concentration of polyamide-epichlorohydrin resin (trade name: WS4002, available from Seiko PMC Corporation) was used.

Examples 2 to 12, 14, and 15 and Comparative Examples 1 to 5

The stretched porous films of Examples 2 to 12, 14, and 15, and Comparative Examples 1 to 5 were obtained by performing the surface treatment in the same manner as in Example 1 except for using the stretched porous films of Production Examples 2 to 17 shown in Table 2 in place of the stretched porous film of Production Example 1. The polyolefin stretched porous film of Example 3 had the wetting tension of the surface of 39 mN/m.

Example 13 and Comparative Examples 6 and 7

Respective stretched porous films of Production Examples 3, 18, and 19 shown in Table 2 were used as is, without performing surface treatment, as the stretched porous films of Example 13 and Comparative Examples 6 and 7. The polyolefin stretched porous film of Example 13 had the wetting tension of the surface of 41 mN/m.

[Table 2]

| Production Example | Resin composition | | | Machine-direction stretching conditions | | Transverse-direction stretching conditions | | Thickness of each layer (μm) | | | | Basis weight of each layer (g/m²) | | | | Content (mass%) | |
|---|---|---|---|---|---|---|---|---|---|---|---|---|---|---|---|---|---|
| | Front skin layer | Core layer | Back skin layer | Stretching temperature (°C) | Stretching ratio (times) | Stretching temperture (°C) | Stretching ratio (times) | Front skin layer | Core layer | Back skin layer | Total | Front skin layer | Core layer | Back skin layer | Total | Polyolefin-based resin | Fine filler |
| Production Example 1 | (b) | (a) | (b) | 142 | 5 | 155 | 8 | 3.5 | 66.0 | 3.5 | 73.0 | 2.0 | 36.0 | 2.0 | 40.0 | 54.74 | 45.01 |
| Production Example 2 | (d) | (c) | (d) | 142 | 5 | 155 | 8 | 3.3 | 62.0 | 3.2 | 68.5 | 2.0 | 36.0 | 2.0 | 40.0 | 54.74 | 45.01 |
| Production Example 3 | (f) | (e) | (f) | 142 | 5 | 155 | 8 | 3.5 | 66.0 | 3.5 | 73.0 | 2.0 | 36.0 | 2.0 | 40.0 | 54.74 | 45.01 |
| Production Example 4 | (h) | (g) | (h) | 142 | 5 | 155 | 8 | 3.3 | 59.0 | 3.3 | 65.6 | 2.0 | 34.2 | 2.0 | 38.2 | 59.79 | 39.96 |
| Production Example 5 | (h) | (g) | (h) | 142 | 5 | 150 | 8 | 3.6 | 63.0 | 3.5 | 70.1 | 2.0 | 34.2 | 2.0 | 38.2 | 59.79 | 39.96 |
| Production Example 6 | (j) | (i) | (j) | 142 | 5 | 155 | 8 | 3.8 | 78.0 | 3.8 | 85.6 | 2.0 | 38.0 | 2.0 | 42.0 | 49.70 | 50.05 |
| Production Example 7 | (j) | (i) | (j) | 142 | 5 | 150 | 8 | 4.2 | 84.0 | 4.2 | 92.4 | 2.1 | 37.8 | 2.1 | 42.0 | 49.72 | 50.03 |
| Production Example 8 | - | (j) | - | 142 | 5 | 155 | 8 | - | 65.0 | - | 65.0 | - | 40.3 | - | 40.3 | 53.95 | 45.80 |
| Production Example 9 | - | (f) | - | 140 | 5 | 150 | 8 | - | 73.0 | - | 73.0 | - | 40.0 | - | 40.0 | 54.65 | 45.10 |
| Production Example 10 | (l) | (k) | (l) | 140 | 5 | 155 | 8 | 7.5 | 150.0 | 7.5 | 165.0 | 2.5 | 47.6 | 2.5 | 52.5 | 29.56 | 70.38 |
| Production Example 11 | - | (l) | - | - | - | 155 | 8 | - | 85.0 | - | 85.0 | - | 51.9 | - | 51.9 | 31.95 | 67.80 |
| Production Example 12 | (n) | (m) | (n) | 142 | 5 | 155 | 8 | 2.7 | 48.0 | 2.7 | 53.4 | 2.0 | 33.6 | 2.0 | 37.6 | 61.58 | 38.17 |
| Production Example 13 | (p) | (o) | (p) | 142 | 5 | 155 | 8 | 4.0 | 74.0 | 4.0 | 82.0 | 2.5 | 35.0 | 2.5 | 40.0 | 55.01 | 44.74 |

(continued)

| Production Example | Resin composition | | | Machine-direction stretching conditions | | Transverse-direction stretching conditions | | Thickness of each layer (μm) | | | | Basis weight of each layer (g/m²) | | | | Content (mass%) | |
|---|---|---|---|---|---|---|---|---|---|---|---|---|---|---|---|---|---|
| | Front skin layer | Core layer | Back skin layer | Stretching temperture (°C) | Stretching ratio (times) | Stretching temperture (°C) | Stretching ratio (times) | Front skin layer | Core layer | Back skin layer | Total | Front skin layer | Core layer | Back skin layer | Total | Polyolefin-based resin | Fine filler |
| Production Example 14 | (r) | (q) | (r) | 142 | 5 | 155 | 8 | 2.3 | 41.0 | 2.3 | 45.6 | 2.0 | 30.3 | 2.0 | 34.3 | 72.09 | 27.66 |
| Production Example 15 | - | (s) | - | 142 | 5 | 155 | 8 | - | 48.0 | - | 48.0 | - | 35.0 | - | 35.0 | 70.05 | 29.95 |
| Production Example 16 | - | (t) | - | 142 | 5 | 155 | 8 | - | 48.0 | - | 48.0 | - | 35.0 | - | 35.0 | 70.05 | 29.95 |
| Production Example 17 | (v) | (u) | (v) | 140 | 5 | 155 | 8 | 2.4 | 34.0 | 2.3 | 38.7 | 1.5 | 31.2 | 1.5 | 34.2 | 73.51 | 26.24 |
| Production Example 18 | - | (w) | - | - | - | 155 | 8 | - | 82.0 | - | 82.0 | - | 49.3 | - | 49.3 | 33.13 | 64.87 |
| Production Example 19 | - | (x) | - | 142 | 5 | 155 | 8 | - | 48.0 | - | 48.0 | - | 35.0 | - | 35.0 | 70.03 | 29.97 |
| Production Example 20 | - | (y) | - | 142 | 5 | 155 | 8 | - | 70.0 | - | 70.0 | - | 40.0 | - | 40.0 | 59.12 | 40.63 |
| Production Example 21 | - | (z) | - | 142 | 5 | 155 | 8 | - | 72.0 | - | 72.0 | - | 40.0 | - | 40.0 | 59.00 | 40.75 |
| Production Example 22 | - | (zz) | - | 142 | 5 | 155 | 8 | - | - | - | - | - | - | - | - | (21.10) | (78.65) |

[Table 3]

| | | Summary of polyolefin stretched porous film | | Physical properties of polyolefin stretched porous film | | | | | | | | | | | | |
|---|---|---|---|---|---|---|---|---|---|---|---|---|---|---|---|---|
| | Production Example | Present or absent of surface treatment on film | Average primary particle size of fine filler ($\mu$m) | Water permeability (sec) | Moisture permeability (g/m$^{-2}$·24h) | Gas permeability (sec) | Wetting tension (mN/m) | Thickness ($\mu$m) | Basis weight (g/m$^2$) | Density $\rho_w$ (g/cm$^3$) | Density $\rho_s$ (g/cm$^3$) | Density $\rho_o$ (g/cm$^3$) | Communicating void fraction (%) | Entire void fraction (%) | Communicating void fraction / entire void fraction | $\rho_s - \rho_w$ |
| Example 1 | Production Example 1 | Present | 0.15 | 84,600 | 1,213 | 7,533 | 35 | 73.0 | 40.0 | 0.55 | 1.09 | 1.30 | 41.5 | 57.7 | 0.72 | 0.54 |
| Example 2 | Production Example 2 | Present | 0.16 | 30,600 | 1,342 | 5,482 | 38 | 68.5 | 40.0 | 0.58 | 1.12 | 1.30 | 41.2 | 55.1 | 0.75 | 0.54 |
| Example 3 | Production Example 3 | Present | 0.16 | 36,000 | 1,060 | 35,325 | 39 | 73.0 | 40.0 | 0.55 | 1.09 | 1.30 | 41.5 | 57.7 | 0.72 | 0.54 |
| Example 4 | Production Example 4 | Present | 0.16 | 48,000 | 943 | 64,982 | 36 | 65.6 | 38.2 | 0.58 | 1.04 | 1.24 | 37.1 | 53.2 | 0.70 | 0.46 |
| Example 5 | Production Example 5 | Present | 0.16 | 54,000 | 799 | 33,595 | 36 | 70.1 | 38.2 | 0.54 | 1.04 | 1.24 | 40.3 | 56.5 | 0.71 | 0.50 |
| Example 6 | Production Example 6 | Present | 0.16 | 30,600 | 1,450 | 9,608 | 36 | 85.6 | 42.0 | 0.49 | 1.14 | 1.36 | 47.8 | 64.0 | 0.75 | 0.65 |
| Example 7 | Production Example 7 | Present | 0.16 | 21,600 | 1,720 | 7,986 | 36 | 92.4 | 42.0 | 0.45 | 1.14 | 1.36 | 50.7 | 66.9 | 0.76 | 0.69 |
| Example 8 | Production Example 8 | Present | 0.15 | 43,200 | 820 | 6,639 | 36 | 65.0 | 40.3 | 0.62 | 1.09 | 1.31 | 35.9 | 52.7 | 0.68 | 0.47 |

EP 3 388 476 A1

(continued)

Summary of polyolefin stretched porous film / Physical properties of polyolefin stretched porous film

| | Production Example | Present or absent of surface treatment on film | Average primary particle size of fine filler ($\mu$m) | Water permeability (sec) | Moisture permeability (g/m$^2$·24h) | Gas permeability (sec) | Wetting tension (mN/m) | Thickness ($\mu$m) | Basis weight (g/m$^2$) | Density $\rho_w$ (g/cm$^3$) | Density $\rho_s$ (g/cm$^3$) | Density $\rho_o$ (g/cm$^3$) | Communicating void fraction (%) | Entire void fraction (%) | Communicating void fraction / entire void fraction | $\rho_s - \rho_w$ |
|---|---|---|---|---|---|---|---|---|---|---|---|---|---|---|---|---|
| Example 9 | Production Example 9 | Present | 0.15 | 25,200 | 1,600 | 5,216 | 36 | 73.0 | 40.0 | 0.55 | 1.09 | 1.30 | 41.5 | 57.7 | 0.72 | 0.54 |
| Example 10 | Production Example 10 | Present | 0.15 | 12,600 | 2,390 | 81,647 | 34 | 165.0 | 52.5 | 0.32 | 1.41 | 1.70 | 64.1 | 81.2 | 0.79 | 1.09 |
| Example 11 | Production Example 11 | Present | 0.15 | 14,400 | 2,355 | 5,487 | 35 | 85.0 | 51.9 | 0.61 | 1.25 | 1.58 | 40.5 | 61.4 | 0.66 | 0.64 |
| Example 12 | Production Example 12 | Present | 0.16 | 77,400 | 742 | 73,987 | 34 | 53.4 | 37.6 | 0.70 | 0.93 | 1.22 | 18.9 | 42.6 | 0.44 | 0.23 |
| Example 13 | Production Example 3 | Absent | 0.16 | 36,000 | 1,060 | 35,325 | 41 | 73.0 | 40.0 | 0.55 | 1.09 | 1.30 | 41.5 | 57.7 | 0.72 | 0.54 |
| Example 14 | Production Example 20 | Present | 0.46 | 50,120 | 1,013 | 18,320 | 36 | 70.0 | 40.0 | 0.57 | 1.07 | 1.30 | 38.5 | 56.2 | 0.68 | 0.50 |
| Example 15 | Production Example 21 | Present | 0.75 | 56,300 | 2,145 | 8,323 | 36 | 72.0 | 40.0 | 0.56 | 1.00 | 1.30 | 33.8 | 56.9 | 0.59 | 0.44 |
| Comparative Example 1 | Production Example 13 | Present | 0.83 | 43,560 | 2,831 | 3,571 | 34 | 82.0 | 40.0 | 0.49 | 1.14 | 1.30 | 50.0 | 62.3 | 0.80 | 0.65 |

| | Summary of polyolefin stretched porous film | | | Physical properties of polyolefin stretched porous film | | | | | | | | | | | | | |
|---|---|---|---|---|---|---|---|---|---|---|---|---|---|---|---|---|---|
| | Production Example | Present or absent of surface treatment on film | Average primary particle size of fine filler ($\mu$m) | Water permeability (sec) | Moisture permeability (g/m$^{-2}$·24h) | Gas permeability (sec) | Wetting tension (mN/m) | Thickness ($\mu$m) | Basis weight (g/m$^2$) | Density $\rho_w$ (g/cm$^3$) | Density $\rho_s$ (g/cm$^3$) | Density $\rho_o$ (g/cm$^3$) | Communicating void fraction (%) | Entire void fraction (%) | Communicating void fraction / entire void fraction | $\rho_s - \rho_w$ |
| Comparative Example 2 | Production Example 14 | Present | 0.83 | 172,800 | 227 | 88,526 | 30 | 45.6 | 34.3 | 0.75 | 0.83 | 1.11 | 7.2 | 32.4 | 0.22 | 0.08 |
| Comparative Example 3 | Production Example 15 | Present | 0.98 | 18,000 | 638 | 87,381 | 52 | 48.0 | 35.0 | 0.73 | 0.83 | 1.14 | 8.8 | 36.0 | 0.24 | 0.10 |
| Comparative Example 4 | Production Example 16 | Present | 0.94 | 64,800 | 672 | 85,583 | 45 | 48.0 | 35.0 | 0.73 | 0.83 | 1.14 | 8.8 | 36.0 | 0.24 | 0.10 |
| Comparative Example 5 | Production Example 17 | Present | 0.87 | 115,200 | 3 | 99,999 | 28 | 38.7 | 34.2 | 0.88 | 0.93 | 1.12 | 4.5 | 21.4 | 0.21 | 0.05 |
| Comparative Example 6 | Production Example 18 | Absent | 1.00 | 10 | 3,708 | 4,279 | 70 | 82.0 | 49.3 | 0.60 | 1.30 | 1.60 | 43.8 | 62.5 | 0.70 | 0.70 |
| Comparative Example 7 | Production Example 19 | Absent | 1.00 | 10 | 650 | 2,278 | 56 | 48.0 | 35.0 | 0.73 | 0.83 | 1.14 | 8.8 | 36.0 | 0.24 | 0.10 |
| Comparative Example 8 | Production Example 22 | Present | 0.15 | - | - | - | - | - | - | - | - | - | - | - | - | - |

Evaluation

The production conditions, physical properties, and evaluation results of the stretched porous films are shown in Tables 2 and 3.

As shown in Table 3, the stretched porous film of Example 1 containing the fine filler having a surface hydrophobized by zinc stearate treatment achieved both water impermeability and moisture permeability. Furthermore, the stretched porous film of Example 2 containing the fine filler having a hydrophobic surface and the fine filler having a hydrophilic surface by the aluminum hydroxide treatment achieved even higher moisture permeability than the moisture permeability of Example 1 and achieved both water impermeability and moisture permeability.

Furthermore, similarly, the stretched porous films of Examples 3 to 15 containing the fine filler having a hydrophobic surface by the aluminum stearate treatment and the fine filler having a hydrophilic surface achieved both water impermeability and moisture permeability.

On the other hand, with the stretched porous films of Comparative Examples 1 to 5 containing a large amount of calcium carbonate having a hydrophobic surface but having a large particle size, it was difficult to achieve both water impermeability and moisture permeability. For example, in Comparative Example 1, it was found that the proportion of the communicating voids is relatively greater relative to the entire voids. On the other hand, in Comparative Examples 2 to 5, it was found that communicating voids were less.

Furthermore, in the stretched porous films of Comparative Examples 6 and 7 which contained no fine filler having a hydrophobic surface, the value of water permeability was extremely low and it was found that water permeation occurs extremely easily.

From the entire void fractions, in the stretched porous films of Examples 1 to 15 and Comparative Example 6, it was found that sufficient voids were formed in the inner part of the film. Furthermore, from the communicating void fraction and (communicating void fraction/entire void fraction), it was found that the communicating voids were favorably formed. At this time, the stretched porous films of Examples 1 to 15 exhibited suitable values of the water permeability and the moisture permeability while the stretched porous film of Comparative Example 6 exhibited extremely high water permeability. These results show that, in Examples 1 to 15, water permeation through the communicating voids is controlled by the fine filler having a hydrophobic surface. Furthermore, the stretched porous films of Examples 1 to 15 exhibited water impermeability due to the value of $\rho_s$ - $\rho_w$ within the predetermined range.

When Examples 3, 10, and 12 are compared, it was found that, when the density $\rho_w$ was less than 0.45 g/cm$^3$, the water permeability tended to be lower (water was permeated easier) and the moisture permeability tended to be greater (water vapor was permeated easier), and when the density was greater than 0.7 g/cm$^3$, the water permeability tended to be greater and the moisture permeability tended to be lower.

**Claims**

1. A polyolefin stretched porous film comprising:

   a polyolefin-based resin, a fine filler having an average primary particle size of 0.05 to 0.8 $\mu$m, and a communicating void;
   the polyolefin stretched porous film comprising a hydrophobizing agent;
   a water permeability measured in accordance with JIS Z 0221 being from 10000 to 85000 seconds; and
   a moisture permeability measured in accordance with JIS Z 0208 being from 700 to 2500 g/m$^2$·24 h.

2. The polyolefin stretched porous film according to claim 1, wherein the polyolefin stretched porous film contains from 25 to 65 mass% of the polyolefin-based resin and from 32 to 72 mass% of the fine filler.

3. The polyolefin stretched porous film according to claim 1 or 2, wherein a gas permeability measured in accordance with JIS P 8117 is from 5000 to 85000 seconds.

4. The polyolefin stretched porous film according to any one of claims 1 to 3, wherein a wetting tension is from 31 to 42 mN/m.

5. The polyolefin stretched porous film according to any one of claims 1 to 4, wherein a density is from 0.45 to 0.7 g/cm$^3$.

6. The polyolefin stretched porous film according to any one of claims 1 to 5, wherein, in a case where a film density measured in accordance with the method A of JIS K 7112 by using distilled water as an immersion liquid is $\rho_w$ and a film density measured in accordance with the method A of JIS K 7112 by using a liquid having a surface tension of 27.3 mN/m as an immersion liquid is $\rho_s$, a difference between the density $\rho_s$ and the density $\rho_w$ is from 0.15 to 1.15.

7. The polyolefin stretched porous film according to any one of claims 1 to 6, wherein, in a case where a film density before stretching measured in accordance with the method A of JIS K 7112 by using distilled water as an immersion liquid is $\rho_0$, a film density after stretching measured in accordance with the method A of JIS K 7112 by using distilled water as an immersion liquid is $\rho_w$, and a film density measured in accordance with the method A of JIS K 7112 by using a liquid having a surface tension of 27.3 mN/m as an immersion liquid is $\rho_s$, a ratio of a communicating void fraction to an entire void fraction defined by the equation below (communicating void fraction/entire void fraction) is from 0.4 to 0.85;

[Equation 1]

$$\frac{\text{Communicating void fraction (\%)}}{\text{Entire void fraction (\%)}} = \frac{\rho_s - \rho_w}{\rho_0 - \rho_w}.$$

8. The polyolefin stretched porous film according to any one of claims 1 to 7, wherein the hydrophobizing agent contains at least one type selected from the group consisting of organic carboxylic acids, salts of organic carboxylic acids, amides of organic carboxylic acids, esters of organic carboxylic acids and alcohols having from 1 to 6 carbons, poly(meth)acrylic acids, and silane coupling agents.

9. The polyolefin stretched porous film according to any one of claims 1 to 8, wherein the fine filler contains inorganic fine powder having the hydrophobizing agent on a surface.

10. The polyolefin stretched porous film according to claim 9, wherein the inorganic fine powder is calcium carbonate.

## INTERNATIONAL SEARCH REPORT

| | International application No. |
|---|---|
| | PCT/JP2016/086544 |

| A. CLASSIFICATION OF SUBJECT MATTER |
|---|
| *C08J9/00*(2006.01)i, *B32B27/32*(2006.01)i |

According to International Patent Classification (IPC) or to both national classification and IPC

| B. FIELDS SEARCHED |
|---|

Minimum documentation searched (classification system followed by classification symbols)
C08J9/00, B32B27/32

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 5701461 B1  (Yupo Corp.),<br>15 April 2015 (15.04.2015),<br>claims 1, 7; paragraphs [0041], [0051], [0052];<br>paragraph [0158], table 1; paragraph [0188],<br>table 2; paragraph [0189], table 3<br>(Family: none) | 1-10 |
| A | JP 2015-166175 A  (Yupo Corp.),<br>24 September 2015 (24.09.2015),<br>claims 1, 3, 5; paragraphs [0034], [0040],<br>[0041], [0047], [0052], [0051]<br>(Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 March 2017 (06.03.17) | 14 March 2017 (14.03.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/086544

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2013-184292 A  (Mitsubishi Plastics, Inc.), 19 September 2013 (19.09.2013), claims 1, 4; paragraphs [0002], [0028], [0055]; paragraph [0063], table 2 (Family: none) | 1-10 |
| A | JP 2001-181423 A  (Yupo Corp.), 03 July 2001 (03.07.2001), claims 1, 4; paragraphs [0011], [0013], [0016], [0019], [0038] (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014080025 A
- JP 11349846 A
- JP 2002363443 A
- WO 2001027193 A
- WO 2004006871 A
- JP 8231873 A
- JP 2005082756 A